# EUROPÄISCHE PATENTSCHRIFT

(11) **EP 1 499 146 B1**
(45) Veröffentlichungstag und Bekanntmachung des Hinweises auf die Patenterteilung: **28.11.2007**
(21) Anmeldenummer: 04010263.4
(22) Anmeldetag: 30.04.2004
(51) Int. Cl.: H04Q 7/34

(54) **Verfahren zur Bewertung der Dienstgüte von Mobilfunknetzen**
Method for determining the quality of service of mobile radio networks
Procédé pour établir la qualité de service de réseaux radio mobiles

(30) Priorität: 18.07.2003 DE 10332997
(43) Veröffentlichungstag der Anmeldung: 19.01.2005
(73) Patentinhaber: DB Systel GmbH, 60326 Frankfurt am Main (DE)
(72) Erfinder: Masur, Klaus-Dieter, 61476 Kronberg (DE)
(74) Vertreter: Zinken-Sommer, Rainer

(56) Entgegenhaltungen:
- US-A1- 2003 061 351
- MANFRED GÖLLER, LOTHAR LENGEMANN: "Messung und Auswertung der QoS-Parameter des Übertragungssystems für ETCS" SIGNAL+DRAHT, Bd. 1/2-2002, 1. Januar 2002 (2002-01-01), Seiten 19-26, XP002376667

## Beschreibung

Die Erfindung betrifft ein Verfahren zur Bewertung der Dienstgüte von Mobilfunknetzen oder Ende-zu-Ende-Mobilfunkdiensten unter Verwendung mindestens eines durch ein Messsystem erfassten und die Qualität des Mobilfunknetzes bzw. des Ende-zu-Ende-Mobilfunkdienstes charakterisierenden Dienstgüte-Parameters.

Bei der Überprüfung und Abnahme von Mobilfunknetzen bzw. Ende-zu-Ende-Mobilfunkdiensten spielt die qualitative Beurteilung des Verbindungsaufbaus bzw. der bereits aufgebauten Mobilfunkverbindungen eine zentrale Rolle. Nach wie vor bereitet jedoch die Überprüfung sowie die verbindliche und damit vertragsrelevante Beurteilung dieser sogenannten Dienstgüte bzw. Quality of Service (QoS) grosse Schwierigkeiten. Es existiert zwar eine Vielzahl von Definitionen möglicher Parameter, die zur Charakterisierung der Dienstgüte herangezogen werden können, jedoch ist oftmals die messtechnische Erfassung und nachfolgende Aus- und Bewertung dieser Parameter noch nicht gelöst. Die vorliegende erfinderische Idee klammert aus Gründen der Übersichtlichkeit den Aspekt der Messwerterfassung aus und setzt dies als gegeben voraus; sie konzentriert sich vielmehr auf den Aspekt der Aus- und Bewertung der messtechnisch erfassten Grössen.
Ein derzeit bekanntes Verfahren ist in der Veröffentlichung "Messung und Auswertung der QoS-Parameter des Übertragungssystems für ETCS" (Göller, Lengemann; Signal und Draht (94) 1+2/2002) beschrieben. Dieses Verfahren basiert auf einem in seiner funktionalen Ausprägung unveränderbaren statistischen Test mittels einer Attributprüfung unter Berücksichtigung einer festdefinierten Verteilungsdichtefunktion (Binomialverteilung). Dabei wird in der Praxis als besonders nachteilig empfunden, dass dieses Verfahren für den statistischen Test weder Optionen hinsichtlich verschiedener funktionaler Ausprägungen in Form unterschiedlicher Test-Szenarien unterstützt noch andere Verteilungsdichtefunktionen als die Binomialverteilung zulässt. Die Zielstellung dieses Verfahrens liegt nicht bei einem Test gegen vertraglich fixierte Dienstgüteparameterwerte. Ebenso lässt sich der Stichprobenumfang N nicht unabhängig von allen anderen Testkenngrößen vorgeben.
Der Erfindung liegt die Aufgabe zugrunde, ein Verfahren zur Bewertung der Dienstgüte von Mobilfunknetzen oder Ende-zu-Ende-Mobilfunkdiensten zu entwickeln, das die Verwendung unterschiedlicher Verteilungsdichtefunktionen bezüglich der relativen Häufigkeit des Ereigniseintrittes "gemessene Parametergrösse entspricht den Vorgaben" bzw. "gemessene Parametergrösse entspricht nicht den Vorgaben" unterstützt. Insbesondere ist die freie Wählbarkeit aus den Funktions-Typen "hypergeometrische Verteilung", "Binomialverteilung", "Poissonverteilung" und "Normalverteilung" zu gewährleisten. Ebenso ist es erforderlich, dass das Bewertungsverfahren die Nutzung verschiedener optionaler funktionaler Testausprägungen in Form unterschiedlicher Test-Szenarien zuläßt. Für die Praxis ist es nützlich, dass für eine vertragsrelevante Dienstgütebewertung optional einerseits der Stichprobenumfang durch die jeweiligen Vertragspartner - Lieferant und die Lieferung abnehmender Kunde - unabhängig von allen anderen Testkenngrößen (Kundenrisiko, Lieferantenrisiko, Zielwert-Wahrscheinlichkeit eines spezifischen Dienstgüte-Parameters, alternative Zielwert-Wahrscheinlichkeit eines spezifischen Dienstgüte-Parameters) vorgebbar sein kann sowie anderseits der Stichprobenumfang sich optional aus den oben genannten Testkenngrößen berechnen lässt. Weiterhin ist es für die Praxis nützlich, wenn die Zielwert-Wahrscheinlichkeit eines spezifischen Dienstgüte-Parameters und die alternative Zielwert-Wahrscheinlichkeit eines spezifischen Dienstgüte-Parameters optional in unterschiedlichen Relationen (größer oder kleiner) zueinander stehen können.
Unter "Kundenrisiko" wird hierbei die Wahrscheinlichkeit β einer fälschlichen Annahme des überprüften Dienstgüte-Parameters durch den Kunden auf Basis einer als "korrekt" bewerteten Stichprobe verstanden, obwohl der Dienstgüteparameter in der Realität nicht den vertraglichen Vereinbarungen genügt.
Unter "Lieferantenrisiko" wird hierbei die Wahrscheinlichkeit α einer fälschlichen Ablehnung des überprüften Dienstgüte-Parameters durch den Kunden auf Basis einer als "nicht korrekt" bewerteten Stichprobe verstanden, obwohl der Dienstgüteparameter in der Realität den vertraglichen Vereinbarungen genügt.

Diese Aufgabe wird in Verbindung mit dem Oberbegriff des Patentanspruches 1 erfindungsgemäß dadurch gelöst, dass eine Stichprobe mit Umfang N=n vorgegeben und jeweils eine Annahmezahl R₁= r₁(β,p₀, N=n)*n bzw. eine Abweisungszahl R₂= r₂(α,p₀,N=n)*n gebildet werden sowie der Parameter als "den Vorgaben entsprechend" gewertet wird, wenn eine Anzahl X der fehlerfreien Messungen dieses Parameters innerhalb der Stichprobe größer als die Annahmezahl R₁ ist, bzw. dass dieser Parameter als "den Vorgaben nicht entsprechend" gewertet wird, wenn diese Anzahl X kleiner als die Abweisungszahl R₂ ist.

Die funktionale Ausprägung des statistischen Hypothesentests ist durch die Annahmefunktion und die Abweisungsfunktion bestimmt. Diese nähern sich asymptotisch mit größer werdendem Stichprobenumfang N der jeweiligen Zielwertwahrscheinlichkeit an und können einen gemeinsamen Schnittpunkt aufweisen. Für den Schnittpunkt gilt r₁(β, N=n) = r₂(α,N=n) = r. Dieser bestimmt den Stichprobenumfang n und die Annahmezahl R=r*n. Schneiden sich die beiden Funktionen nicht, lässt sich der Stichprobenumfang n vorgeben. Es gilt dann r₁(β,N=n)= r₁ ≠ r₂(α,N=n) = r₂. Für die Annahmezahl gilt hierbei R₁=r₁*n und für die Abweisungszahl R₂=r₂*n. Das oben genannte, aus dem Stand der Technik bekannte Verfahren ermöglicht dieses "Nichtschneiden" der Funktionen nicht und unterstützt somit nicht die für die Praxis überaus nützliche Testoption, eine von allen Testkenngrößen unabhängige Festlegung des Stichprobenumfangs N=n zu ermöglichen.
Der sich ergebende Unschärfebereich für den Fall, das die Anzahl X grösser als R₂, jedoch kleiner als R₁ ist, kann zusätzlich dadurch abgemildert werden, dass der Parameter als "den Vorgaben bedingt entsprechend" gewertet wird, wenn die Anzahl X der fehlerfreien Messungen dieses Parameters innerhalb einer Stichprobe kleiner als die Annahmezahl R₁ und grösser als n*p₀ ist, bzw. dass dieser Parameter als "den Vorgaben bedingt nicht entsprechend" gewertet wird, wenn diese Anzahl X grösser als die Abweisungszahl R₂ und kleiner als n*p₀ ist.
In der Praxis kann es nützlich sein, optional den Stichprobenumfang unabhängig von allen anderen Testkenngrößen vorzugeben um somit diesen als wesentliche Testrandbedingung festzulegen.

Alternativ hierzu kann es von Vorteil sein, wenn eine alternative Parameterwahrscheinlichkeit p₁≠p₀ vorgegeben wird und die Annahmefunktion r₁(β,p₁,N) falls p₀>p₁ bzw. r₁(β,p₀,N) falls p₁>p₀ und eine Ablehnungsfunktion r₂(α,p₀,N) falls p₀>p₁ bzw. r₂(α,p₁,N) falls p₁>p₀ berechnet wird. Da in diesem Fall ein Schnittpunkt zwischen der Annahmefunktion r₁(β,p₁, N) falls p₀>p₁ bzw. r₁(β,p₀, N) falls p₁>p₀ und der Ablehnungsfunktion r₂(α,p₀,N) falls p₀>p₁ bzw. r₂(α,p₁,N) falls p₁>p₀ mit r₁(β,p₁, N=n)= r₂(α,p₀,N=n)= r falls p₀>p₁ bzw. r₁(β,p₀,N=n)=r₂(α,p₁,N=n)=r falls p₁>p₀ existiert, kann eine Annahmezahl R=r*n an der Stelle N=n ermittelt werden. Der zu evaluierende Parameter wird sodann als "den Vorgaben entsprechend" gewertet, wenn die Anzahl X der fehlerfreien Messungen dieses Parameters innerhalb einer Stichprobe grösser als die Annahmezahll R ist bzw. als "den Vorgaben nicht entsprechend" gewertet, wenn die Anzahl X kleiner als die Annahmezahl R ist. Gegenüber der oben genannten Option gibt es nun somit bezüglich einer Aussage über das (Nicht-)Bestehen des Testes keinen Unschärfebereich mehr.
In der Praxis kann es nützlich sein, einerseits in einem Test einen Unschärfebereich zu vermeiden aber andererseits zusätzlich zwischen p₀>p₁ und p₁>p₀ optional wählen zu können, um die Vertragserfüllung stärker (p₁>p₀) und schwächer (p₀>p₁) testen zu können.

Schliesslich ist auch ein Bewertungsverfahren von Vorteil, bei dem alternative Parameterwahrscheinlichkeiten p₁ und p₂, wobei p₂<p₀<p₁ gilt, vorgegeben werden sowie die Annahmefunktion r₁(β,p₂,N) unter Verwendung von p₂ und die Ablehnungsfunktion r₂(α,p₁,N) unter Verwendung von p₁ berechnet werden. Da sich auch in diesem Fall ein Schnittpunkt von Annahmefunktion r₁(β,p₂,N) und Ablehnungsfunktion r₂(α,p₁,N) mit r,(β,p₂,N=n) = r₂(α,p1,N=n) = r existiert, kann die Annahmezahl R=r*n an der Stelle N=n ermittelt werden. Der zu evaluierende Parameter wird sodann als "den Vorgaben entsprechend" gewertet, wenn die Anzahl X der fehlerfreien Messungen dieses Parameters innerhalb einer Stichprobe grösser als die Annahmezahl R ist bzw. als "den Vorgaben nicht entsprechend" gewertet, wenn die Anzahl X kleiner als die Annahmezahl R ist.
In der Praxis kann es nützlich sein, in einem Test einen Unschärfebereich zu vermeiden und optional zusätzlich zwischen "Vertrag übererfüllt" (p₁) und "Vertrag untererfüllt" (p₂) testen zu können.

Der Erfindungsgedanke wird in nachfolgenden Figuren verdeutlicht. Es zeigt jeweils in Prinzipdarstellung:
- **Figur 1**: Bewertungsverfahren mit vorgegebenem Stichprobenumfang N=n und einer für den Abnahmetest vorgegebenen Parameter-Zielwert-wahrscheinlichkeit p₀

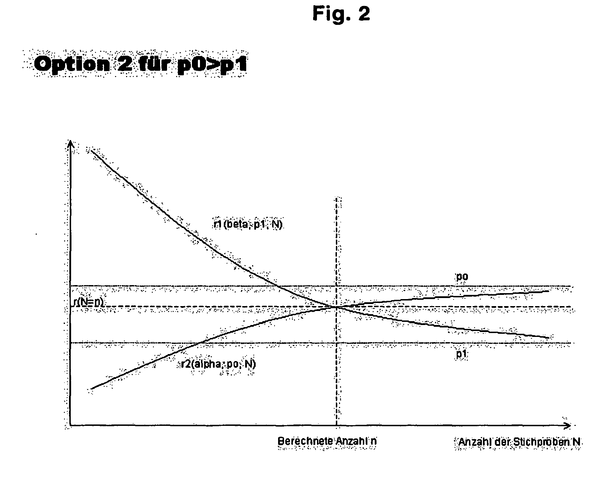

- **Figur 2**: Bewertungsverfahren mit rechnerisch ermitteltem Stichprobenumfang N=n, einer für den Abnahmetest vorgegebenen Parameter-Zielwert-wahrscheinlichkeit p₀ sowie einer alternativ vorgegebenen Parameter-Zielwertwahrscheinlichkeit p₁, wobei p₀>p₁

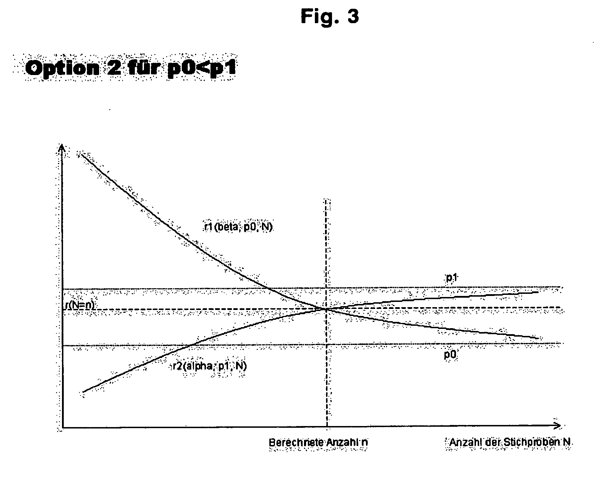

- **Figur 3**: Bewertungsverfahren mit rechnerisch ermitteltem Stichprobenumfang N=n, einer für den Abnahmetest vorgegebenen Parameter-Zielwert-wahrscheinlichkeit p₀ sowie einer alternativ vorgegebenen Parameter-Zielwertwahrscheinlichkeit p₁, wobei p₀<p₁

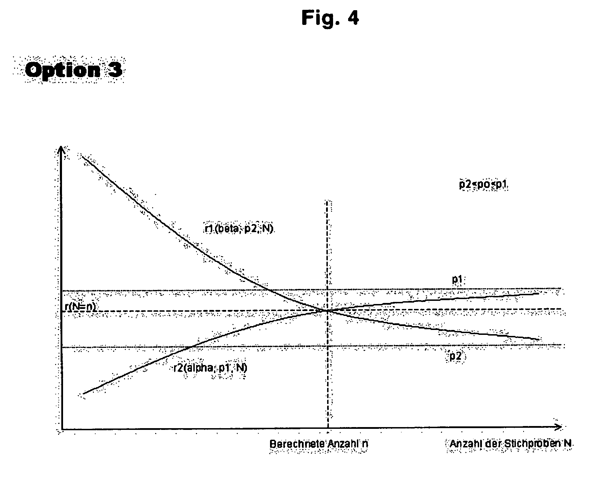

- **Figur 4**: Bewertungsverfahren mit rechnerisch ermitteltem Stichprobenumfang N=n, einer für den Abnahmetest vorgegebenen Parameter-Zielwert-wahrscheinlichkeit p₀ sowie alternativ vorgegebenen Parameter-Zielwertwahrscheinlichkeiten p₁ und p₂, wobei p₂<p₀<p₁

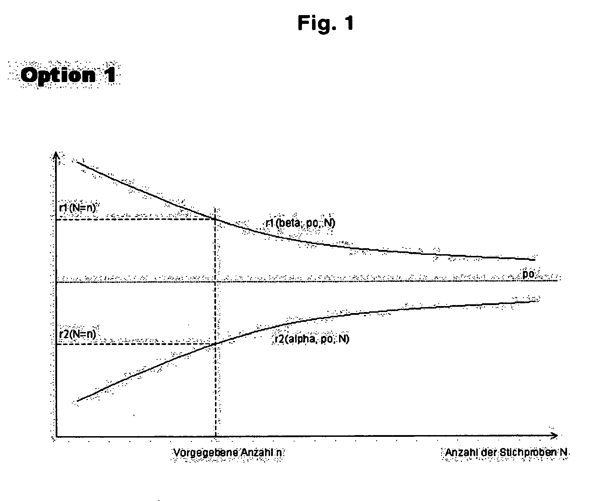

An Hand von Figur 1 lässt sich folgendes Ausführungsbeispiel nachvollziehen: Zwischen den Vertragspartnern (z.B. zwischen dem Lieferanten und dem Betreiber eines Mobilfunknetzes) wurde vereinbart, dass der Dienstgüte-Parameter "Verbindungsaufbauzeit" nach erfolgtem vollständigen Aufbau in 95% der Fälle maximal 5 Sekunden betragen darf. Zur Verifikation dieser vertraglichen Vereinbarung wird gemäss des in Anspruch 2 offenbarten erfinderischen Verfahrene ein Stichprobenumfang von n = 1000, ein Lieferantenrisiko von α=1 %, ein Kundenrisiko von β=1% sowie eine Parameterzielwertwahrscheinlichkeit von p₀=95% vorgegeben. Ferner wird eine Normalverteilung als Verteilungsdichtefunktion ausgewählt.
Unter Anwendung des erfinderischen Verfahrens lässt sich ermitteln:
- r₁(1%,95%, N) ist die Umkehrfunktion der von N abhängigen Verteilungsfunktion (zugehörig zu der Normalverteilung N(95%,95%*5%/N)) bei dem Wert 95%
- r₂(1%,95%, N) ist die Umkehrfunktion der von N abhängigen Verteilungsfunktion (zugehörig zu der Normalverteilung N(95%,95%*5%/N)) bei dem Wert 5%.
Somit:

| | | |
|---|---|---|
| r₁(N=n=1000)=0,966 | bzw. | R₁=966 |
| r₂(N=n=1000)=0,934 | bzw. | R₂=934 |

Somit kann die Abnahme des Mobilfunknetzes bezüglich des Parameters "Verbindungsaufbauzeit" unter Beachtung folgender Abhängigkeiten erfolgen:
- Der Test wird als "bestanden" gewertet, wenn die Anzahl X der Verbindungen mit Aufbauzeiten von maximal 5 Sekunden grösser als 966 ist.
- Der Test wird als "nicht bestanden" gewertet, wenn die Anzahl X der Verbindungen mit Aufbauzeiten von maximal 5 Sekunden kleiner als 934 ist.
- Der Test wird als "bedingt bestanden" gewertet, wenn die Anzahl X der Verbindungen mit Aufbauzeiten von maximal 5 Sekunden grösser als 950 und kleiner als 966 ist.
- Der Test wird als "bedingt nicht bestanden" gewertet, wenn die Anzahl X der Verbindungen mit Aufbauzeiten von maximal 5 Sekunden kleiner als 950 und grösser als 934 ist.

### Bezugszeichenliste:

- N: Anzahl der Stichproben
- n: Stichprobenumfang (vorgegeben oder rechnerisch ermittelt)
- α: Lieferantenrisiko
- β: Kundenrisiko
- p, p₀: Zielwert-Wahrscheinlichkeit eines spezifischen Dienstgüte-Parameters
- p,: alternative Zielwert-Wahrscheinlichkeit eines spezifischen Dienstgüte-Parameters
- p₂: zweite alternative Zielwert-Wahrscheinlichkeit eines spezifischen Dienstgüte-Parameters
- r₁(β,p,N): Annahmefunktion
- r₂(α,p,N): Abweisungsfunktion
- R₁: Annahmezahl
- R₂: Abweisungszahl
- R: Akzeptanzzahl
- X: Anzahl der fehlerfreien Messungen eines spezifischen Dienstgüte-Parameters innerhalb einer Stichprobe

## Patentansprüche

1. Verfahren zur Bewertung der Dienstgüte von Mobilfunknetzen oder Ende-zu-Ende-Mobilfunkdiensten unter Verwendung mindestens eines durch ein Messsystem fassten und die Qualität des Mobilfunknetzes bzw. des Ende-zu-Ende-Mobilfunkdienstes charakterisierenden Dienstgüte-Parameters, der einem statistischen Hypothesentest in Form eines Alternativtestes mit Attributprüfung, bei dem jeweils eine Annahmefunktion r₁(β, p, N) und eine Abweisungsfunktion r₂(α, p, N) ermittelt werden, unterzogen wird,
• wobei die Annahmefunktion r₁(β, p, N) als die Umkehrfunktion der von einer Stichproben-Anzahl N sowie einer Zielwert-Wahrscheinlichkeit p dieses Dienstgüte-Parameters abhängigen und einer vorgebbaren Verteilungsdichtefunktion der relativen Häufigkeit des Ereignisseintritts eines Experiments mit zwei unterschiedlichen Ausgängen zugehörigen Verteilungsfunktion bei dem Wert 1-β ermittelt wird,
• wobei die Abweisungsfunktion r₂(α, p, N) als die Umkehrfunktion der von der Stichproben-Anzahl N sowie der Zielwert-Wahrscheinlichkeit p dieses Dienstgüte-Parameters abhängigen und einer vorgebbaren Verteilungsdichtefunktion der relativen Häufigkeit des Ereignisseintritts eines Experiments mit zwei unterschiedlichen Ausgängen zugehörigen Verteilungsfunktion bei dem Wert α ermittelt wird,
• wobei α das Risiko des anbietenden Lieferanten und β das Risiko des abnehmenden Kunden bezüglich einer auf einem fehlerhaften Testergebnis basierenden Annahme- bzw. Abweisungsentscheidung darstellt,
**dadurch gekennzeichnet,**
**dass** eine Stichprobe mit Umfang N=n vorgegeben und jeweils eine Annahmezahl R₁= r₁(β,p₀, N=n)*n bzw. eine Abweisungszahl R₂= r₂(α,p₀,N=n)*n gebildet werden sowie der Parameter als "den Vorgaben entsprechend" gewertet wird, wenn eine Anzahl X der fehlerfreien Messungen dieses Parameters innerhalb der Stichprobe größer als die Annahmezahl R₁ ist, bzw. dass dieser Parameter als "den Vorgaben nicht entsprechend" gewertet wird, wenn diese Anzahl X kleiner als die Abweisungszahl R₂ ist.

2. Verfahren zur Bewertung der Dienstgüte von Mobilfunknetzen oder Ende-zu-Ende-Mobilfunkdiensten unter Verwendung eines durch ein Messsystem erfassten und die Qualität des Mobilfunknetzes bzw. des Ende-zu-Ende-Mobilfunkdienstes charakterisierenden Dienstgüteparameters nach Anspruch 1, **dadurch gekennzeichnet, dass** als vorgebbare Verteilungsdichtefunktion der relativen Häufigkeit des Ereignisseintritts eines Tests mit zwei unterschiedlichen Ausgängen die Typen "hypergeometrische Verteilung", "Binomialverteilung", "Poissonverteilung" oder "Normalverteilung" bestimmt werden.

3. Verfahren zur Bewertung der Dienstgüte von Mobilfunknetzen oder Ende-zu-Ende-Mobilfunkdiensten unter Verwendung eines durch ein Messsystem erfassten und die Qualität des Mobilfunknetzes bzw. des Ende-zu-Ende-Mobilfunkdienstes charakterisierenden Dienstgüte-Parameters nach Anspruch 1, **dadurch gekennzeichnet, dass** der Parameter als "den Vorgaben bedingt entsprechend" gewertet wird, wenn die Anzahl X der fehlerfreien Messungen dieses Parameters innerhalb einer Stichprobe kleiner als die Annahmezahl R₁ und grösser als n*p₀ ist, bzw. dass dieser Parameter als "den Vorgaben bedingt nicht entsprechend" gewertet wird, wenn diese Anzahl X grösser als die Abweisungszahl R₂ und kleiner als n*p₀ ist.

## Claims

1. A method for the evaluation of the service quality of mobile telephone networks or end-to-end mobile telephone services using at least one service quality parameter recorded through a measuring system and characterizing the quality of the mobile telephone network or the end-to-end mobile telephone service which is subjected to a statistical hypothesis test in form of an alternative test with attribute check with each of which an acceptance function r₁(β,p,N) and a rejection function r₂(α,p,N) are determined,
o wherein the acceptance function r₁(β,p,N) is determined as the inverse function at the value 1-β of the distribution function which is dependent on a random sample quantity N and a target value probability p of this service quality parameter and which is associated with a predeterminable distribution density function of the relative frequency of the event occurrence of an experiment with two different outputs,
o wherein the rejection function r₂(α,p,N) is determined as the inverse function at the value α of the distribution function which is dependent on the random sample quantity n and the target value probability p of this service quality parameter and which is associated with a predeterminable distribution density function of the relative frequency of the event occurrence of an experiment with two different outputs,
o wherein α constitutes the risk of the offering supplier and β the risk of the subscribing customer with regard to an acceptance or rejection decision based on a defective test result,
**characterized in that**
a random sample with extent N=n is given and an acceptance number R₁=r₁((β,pₒ, N=n)*n or a rejection number R₂=r₂(α,pₒ,N=n)^{*}n is formed and the parameter valuated as "corresponding to the targets" if a quantity X of the error-free measurements of this parameter within the random sample is greater than the acceptance number R₁ or that this parameter is valuated as "not corresponding to the targets" if this quantity X is smaller than the rejection number R₂.

2. The method for evaluating the service quality of mobile radio networks or end-to-end mobile radio services using a service quality parameter according to claim 1 recorded using a measuring system and characterizing the quality of the mobile radio network or the end-to-end mobile radio service, **characterized in that** as predeterminable distribution density function of the relative frequency of the event occurrence of a test with two different outputs the types "hypogeometric distribution", "binomial distribution", "Poisson distribution" or "normal distribution" are determined.

3. The method for evaluating the service quality of mobile radio networks or end-to-end mobile radio services using a service quality parameter recorded by a measuring system and characterizing the quality of the mobile radio network or the end-to-end mobile radio service according to claim 1, **characterized in that** the parameter is valuated as "conditionally corresponding to the targets" if the quality X of the error-free measurements of this parameter within a random sample is smaller than the acceptance number R₁ and greater than n*pₒ and that this parameter is valuated as "conditionally not corresponding to the targets" if this quantity X is greater than the rejection number R₂ and smaller than n*pₒ.

## Revendications

1. Procédé d'évaluation de la qualité de service de réseaux de radio mobile ou de services de radio mobile bout à bout en employant au moins un paramètre de qualité de service enregistré par un système de mesure et caractérisant la qualité du réseau de radio mobile ou du service de radio mobile bout à bout qui subit un test statique à hypothèses sous forme d'un test alternatif avec contrôle d'attributs lors duquel respectivement une fonction d'acceptation r₁(β, p, N) et une fonction de refus r₂(α, p, N) sont déterminées,
• la fonction d'acceptation r₁(β, p, N) étant déterminée sous forme de fonction inversée de la fonction dépendant du nombre d'échantillons N ainsi d'une probabilité de valeur cible p de ce paramètre de qualité de service et d'une fonction de répartition faisant partie d'une fonction prescriptible de densité de répartition de la fréquence relative de l'entrée d'événement d'une expérience à deux sorties différentes à la valeur 1-β,
• la fonction de refus r₂ (α, p, N) étant déterminée sous forme de fonction inversée de la fonction dépendant du nombre d'échantillons N ainsi que de la probabilité de valeur cible p de ce paramètre de qualité de service et d'une fonction de répartition faisant partie d'une fonction prescriptible de densité de répartition de la fréquence relative de l'entrée d'événement d'une expérience à deux sorties différentes à la valeur α,
• α représentant le risque du fournisseur offrant et β le risque du client acquéreur au niveau d'une décision d'acceptation ou de refus basée sur un résultat de test entaché d'erreurs,
**caractérisé en ce que**
il est prédéfini un échantillon d'un volume N=n et que respectivement un indice d'acceptation R₁ = r₁(β, p₀, N=n)*n ou un indice de refus R₂ = r₂(α, p₀, N=n)*n est établi, de même que le paramètre est évalué comme « correspondant aux prescriptions » si un nombre X de mesures exemptes d'erreurs de ce paramètre dans l'échantillon est supérieur à l'indice d'acceptation R₁ ou que ce paramètre est évalué comme « ne correspondant pas aux prescriptions » si ce nombre X est inférieur à l'indice de refus R₂.

2. Procédé d'évaluation de la qualité de service de réseaux de radio mobile ou de services de radio mobile bout à bout en employant un paramètre de qualité de service enregistré par un système de mesure et caractérisant la qualité du réseau de radio mobile ou du service de radio mobile bout à bout selon la revendication 1, **caractérisé en ce qu'**on définit comme fonction prescriptible de densité de répartition de la fréquence relative de l'entrée d'événement d'un test à deux sorties différentes les types « répartition hypergéométrique », « répartition binomiale », « répartition Poisson » ou « répartition normale ».

3. Procédé d'évaluation de la qualité de service de réseaux de radio mobile ou de services de radio mobile bout à bout en employant un paramètre de qualité de service enregistré par un système de mesure et caractérisant la qualité du réseau de radio mobile ou du service de radio mobile bout à bout selon la revendication 1, **caractérisé en ce que** le paramètre est évalué comme « correspondant sous réserve aux prescriptions » lorsque le nombre X de mesures exemptes d'erreurs de ce paramètre dans un échantillon est inférieur à l'indice d'acceptation R₁ et supérieur à n*p₀ ou que ce paramètre est évalué comme « ne correspondant pas sous réserve aux prescriptions » lorsque ce nombre X de mesures exemptes est supérieur à l'indice de refus R₂ et inférieur à n*p₀.
